Europäisches Patentamt

European Patent Office

Office européen des brevets

(11) Publication number: **0 255 353**
**A2**

# EUROPEAN PATENT APPLICATION

(21) Application number: 87306690.6

(22) Date of filing: 29.07.87

(51) Int. Cl.⁴: **B 65 G 47/50**
G 06 K 7/10, B 07 C 3/00

(30) Priority: 26.07.86 GB 8618298

(43) Date of publication of application:
03.02.88 Bulletin 88/05

(84) Designated Contracting States:
AT BE CH DE ES FR GB GR IT LI NL SE

(71) Applicant: WILLETT INTERNATIONAL LIMITED
Dawson House 24, Ladbrooke Road
Chalvey Slough, SL1 2SR (GB)

(72) Inventor: Ashley, Michael David Silverglade
Kirk Knoll Arford Road
Headley Hants GU35 8LJ (GB)

(74) Representative: Dummett, Thomas Ian Peter et al
T.I.P. DUMMETT & Co 14 The Square
Martlesham Heath Ipswich Suffolk, IP5 7SL (GB)

The provisions of Art. 87(1) EPC are considerd to have been observed, pursuant to the notice of the President of the EPO concerning the extension of time limits according to Rule 85 EPC, published in Official Journal 8/1987, page 385.

(54) Transport ordening system.

(57) The invention relates to a method for controlling the travel of articles through an article transport mechanism 2 having a multiplicity of lines of travel for the articles to different destinations 3, which method comprises observing the passage of an article past one of a plurality of sensor units 1 mounted in series along the lines of travel and identifying the identity and/or the destination of that article from information passed to the said one sensor unit 1 from a preceding sensor unit 1, comparing the actual travel duration of the article from that preceding sensor unit 1 to the said one sensor unit with the expected duration of that travel to establish that the observed article is a valid article conforming to the identity and/or destination information provided from the preceding sensor unit 1, transmitting the information of the passage of the article and its identity and/or destination to a succeeding sensor unit 1 along the line of travel and, where required, actuating means 4 for diverting the article onto a different line of travel 2 or into its final destination 3 off the transport mechanism 2.

The invention also provides a sensor assembly and a sensor unit for use in the method of the invention and an article transport mechanism incorporating such sensor units and sensor assemblies.

Fig.1

**Description**

TRANSPORT ORDERING SYSTEM

The present invention relates to a transport ordering system, notably one for recognising and organising the transport of articles to a specified destination along a branching path.

BACKGROUND TO THE INVENTION:

In the handling of a wide range of articles within a location for example in a factory, warehouse or other storage or handling location, it is often desirable that an incoming article be recognised, that its destination, eg. a specified storage bin within the location, be assigned and that the article then be transported mechanically and automatically through the system to the desired destination. In systems proposed hitherto, the articles carry some form of identification and destination code thereon, eg. a mechanically, optically and/or electronically readable card or label, which is scanned or sensed at a number of points as the article travels along the moving belt conveyor or other transport means carrying articles through the system. The signal from the scanner or sensor is fed to a central computer which relates that signal to information fed to it as the article entered the system to identify which path the article is to follow to reach the desired destination. The computer then actuates the necessary gates or deflectors to move the article from one conveyor to another through the system and ultimately to the desired destination.

Such a system requires the use of a comparatively large computer capacity to handle all the data relating to the many articles which may be in transit in the system at any one time. Moreover, it is necessary to link each scanner or sensor back to the central computer and to link the computer to each gate or deflector throughout the length of the conveyor system. This means that the system is costly and complex to install and once installed is not readily capable of variation and/or expansion.

In order to reduce the need to refer information back to a central computer and thus reduce the complexity of the control system, it has been proposed, for example in US patent 3743090, to scan each article as it passes a sensor at a scanning station controlling one of the gates or deflectors selecting the path which the article follows through the system. The sensor identifies the article and its destination and holds that information in a memory within the scanning station. When the article leaves that station and reaches the next scanning station along its path, the first sensor passes the information about the article and its destination on to the sensor at that next station. Alternatively, it actuates a gate or deflector to remove that article from the conveyor into its desired destination. Thus, in thoery the information about the article and its destination travels along the path with the article and is not processed through a central computer.

Whilst such a system should overcome the need to feed information to and from a central computer controlling the operation of the whole system, it suffers from the problem that the system handles information about the articles strictly in sequence. Therefore, if for any reason an article is displaced from the conveyor, the sequence of information being passed along the path is put out of synchronisation with the stream of articles. Alternatively, if a false signal is generated at one of the stations, for example by a hand or garment passing in front of the sensor, the system will treat that as one of the articles and will attempt to direct that to the appropriate destination. As a result, the information about the succeeding articles will now be out of synchrony with the articles being handled. These problems become aggravated where any attempt is made to use a branching system of conveyors as opposed to a single closed loop conveyor. Since false signals or loss of articles from the conveyor are commonplace, such a system is not practicable unless extreme measures are taken to prevent dislocation of articles on the conveyor. This is both expensive and impractical.

In another system in US patent 3141540, it has been proposed to mount the sensors so closely to one another that the maximum distance between sensors is less than the minimum length of any of the articles travelling through the system. In this way an article will always be scanned by at least two adjacent sensors and it is not possible to introduce erroneous signals into the stream of data being passed from one sensor to the next. However, such a system requires a large number of sensors and is complex and expensive to install. Furthermore, once set up, it is inflexible and cannot handle articles having a length shorter than that for which the system was initially set up.

In an alternative proposal in US patent 3352417, the sensors are set at fixed intervals along the length of the path so that the data can be synchronised with the passage of articles along the conveyor system. However, such a system is inflexible and often requires sensors be located at positions which are inconvenient and often even where a sensor is not required to control a gate or divertor. This results in unecessary duplication of sensors whose function is merely to ensure that information is passed along the system rather than controlling the path selected for the article.

In view of the problems with the prior proposals, no satisfactory system for controlling the travel of articles along a conveyor system to a variety of different destinations has been found acceptable in practice which does not use a centralised computer control.

We have now devised a system for controlling the transport of articles through a conveyor system which uses a simple article/destination recognition system which is passed from one sensor to the next along the path to be travelled by the article and which dispenses with the need for a central computer, thus enabling the system to be varied or expanded simply to suit changing requirements within the storage or other location. The problems with prior proposals due to false signals or insertion or removal of articles from the conveyor system are reduced by incorporating information on the duration of travel from one sensor to the succeeding sensor in the system. That information is passed from one sensor to the next together with the information as to the identity and/or destination of the article. In this way, if an article is displaced on the conveyor, the sensor will detect this because the travel duration information passed to it from the preceding sensor is not satisfied. The present invention does not rely solely upon the sequence of information passed from one sensor to the next and therefore does not require the protection against dislocation of articles that the prior art systems do.

SUMMARY OF THE INVENTION:

Accordingly, the present invention provides a sensor assembly adapted to be operated in association with an article transport mechanism for causing an article to follow a selected one of a multiplicity of lines of travel through the article transport mechanism whereby the article can be delivered to a predetermined destination, which sensor assembly comprises a series of sensor units adapted to be mounted in series with one another along the lines of travel, each sensor unit within but not terminal to the series comprising:

a. means for detecting the passage of an article past the unit,

b. means for receiving and storing information relating to the passage and identity and/or destination of that article from an immediately preceding sensor in the series,

c. means for relaying information relating to the passage of the article and its identity and/or destination to an immediately succeeding sensor unit in the series in response to the passage of the article past the sensor unit,

d. means for receiving and storing information relating to the theoretical duration of the travel of an article from the previous sensor unit to the sensor unit and means for comparing the actual duration with the theoretical duration to establish the validity or otherwise of the article being detected by the sensor unit, and optionally

e. means for actuating a means for varying the line of travel of the article in accordance with the information relating to the identity and/or destination for that article received from the preceding sensor unit in the series.

The invention also provides a transport mechanism provided with a sensor assembly of the invention for controlling the travel of articles through the lines of travel of the mechanism.

The invention also provides a sensor unit comprising a microprocessor programmed to react to the passage of an article past the sensor unit, to react to the identity and/or destination of the article from information supplied to the sensor unit, to determine the duration of travel of the article from a preceding sensor unit and to compare this with the expected duration of travel and to transmit information relating to the passage of the article, its identity and/or destination and expected duration of travel to a succeeding sensor unit in series with the sensor unit.

The invention further provides a method for controlling the travel of articles through an article transport mechanism having a multiplicity of lines of travel for the articles to different destinations, which method comprises observing the passage of an article past one of a plurality of sensor units mounted in series along the lines of travel and identifying that article and/or its destination from information passed to the sensor unit from a preceding sensor unit, comparing the actual travel duration of the article from that preceding sensor unit to the sensor unit with the theoretical duration of that travel to establish that the observed article is a valid article conforming to the destination information provided from the preceding sensor unit, transmitting the information of the passage of the article and its destination to a succeeding sensor unit along the line of travel and, where required, actuating means for diverting the article onto a different line of travel or into its final destination off the transport mechanism.

The invention can be applied to any system where it is desired to transport articles along a path to a desired destination along that path. The invention is of particular use where the path branches repeatedly, as for example in a warehouse storage system. However, the invention could be applied to the on-line sorting of articles, eg. mail sorting, or to the control of trolleys or the like which carry articles through a warehouse, or to the control of the flow of articles through a varying production line. For convenience, the invention will be described in terms of a warehouse having a branching conveyor system carrying articles from an input point to a desired storage bin. It will however be appreciated that the invention can be applied in the reverse sense to collate several streams of articles fed from a different sources to a single conveyor, for example from the output of several production lines. The single collated stream can then be fed into a branching conveyor system where it is broken down to distribute the articles to the desired destination.

DESCRIPTION OF THE DRAWINGS:

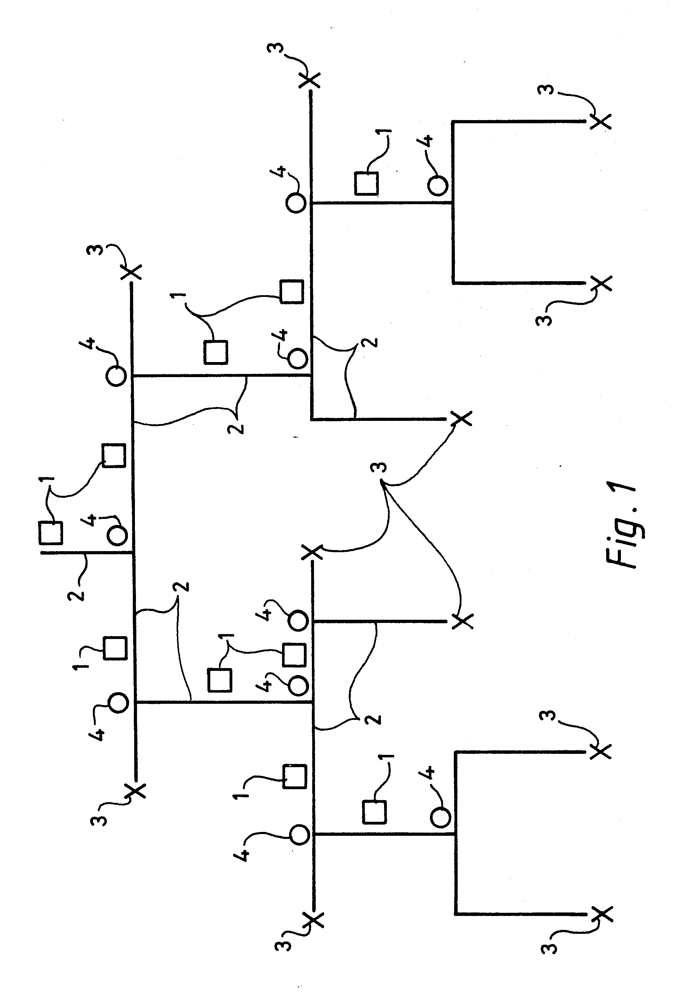

To aid understanding of the invention, it will be described hereinafter with respect to the accompanying drawings in which Figure 1 is a schematic diagram of the layout of a sortation system of the invention; Figure 2 is a shematic block diagram of the elements within a sensor unit for use in the present invention; and Figure 3 is a schematic diagram of a collation system of the invention.

PREFERRED EMBODIMENT OF THE INVENTION:

The system comprises a series of sensor units 1 mounted adjacent a conveyor system comprising a series of conveyors 2 laid out in a branching path network serving the various storage bins or other destinations 3 to which articles are to be fed. The conveyor system can be of a wide range of types, for example endless belt or mesh conveyors which carry the articles upon their upper face; chain or other conveyors in which the articles are suspended from the conveyor; or pneumatic or other systems in which the article is carried in a fluent medium. For convenience the invention will be described hereinafter in terms of continuous belt type conveyors.

The sensor units 1 can be mounted immediately adjacent the conveyor they serve so that the unit detects the passage of an article on the conveyor by a detection device, for example using a micro switch or a flip flop switch which is actuated by contact with the article. Alternatively, the detection device can detect the passage of the article by means of a magnetically operated proximity switch, eg. a Hall effect sensing device, by thermal means or by the interruption of a light beam. In such cases the sensor unit can be mounted some distance away from the conveyor. Typically, a non-contact sensing means will be used and the sensor unit will be mounted to the side of the conveyor. Preferably, the sensing device is actuated by the leading edge of the article as it passes the sensor unit.

The detection device in the sensor unit detects the passage of an article using contact or non-contact means as described above. This detection need not occur as the article actually passes the sensor unit, but the presence of an article could be detected by a detection device located some distance upstream of the sensor unit, as when the leading edge of the article cuts a light beam located upstream of the sensor unit. The term passage of the article is therefore used herein to denote the fact that an article has passed through the area of the conveyor path monitored by the sensor unit.

The conveyor system is provided with means 4 for deflecting an article from one conveyor to another or off a conveyor into a storage bin or other destination. Typically, the deflection means will be a gate or a pusher mechanism which moves the article by physical contact therewith. However, it is within the scope of the present invention to use air blasts or other non-contact means to deflect articles. The operation of the deflection means 4 is controlled by a sensor unit 1 which is usually that sensor immediately upstream of the deflection means. However, there may be instances where another sensor unit 1 is interposed between the deflection means 4 and the sensor unit 1 controlling it, as when the intermediate sensor unit is used solely to detect reject articles and actuates means for rejecting those from the system before they reach the deflection means.

Thus, in its simplest form, the conveyor system comprises a series of conveyors forming a branching network of paths along which articles travel to reach storage bins or other destinations located along those paths or at the ends thereof, each branch in the path having a deflection means operatively associated therewith and each destination not located at the end of a path having a deflection means associated therewith, each deflection means being controlled by a sensor unit located upstream thereof, each sensor unit being connected in series with the sensor unit upstream thereof to form a branching string of the sensor units extending from a single sensor unit at the entry point to the conveyor system. A total conveyor system may consist of more than one of such basic systems radiating from a central entry point or operating in cascade with one another, for example where the number of destinations in the total system exceeds the number which can be handled by the sensor units used, re-entry of destination information occuring when an article transfers from one basic system to the next. Alternatively, the system can have an initial collation system receiving articles from a number of sources and feeding a collated single stream of articles to the input of a distribution system as described above.

As indicated above, the sensor units carry out several functions as an article passes them. Firstly, the sensor unit detects the passage of an article and transmits that fact to the succeeding sensor unit in the series. This initiates the travel duration monitoring of the sensor. The sensor unit contains information about the expected duration of the travel of the article from the preceding sensor unit which it can either hold in its own memory or this information can be sent to it from the preceding sensor unit. The sensor unit also has means, for example a timer/counter, for establishing the actual travel duration and for comparing that with the estimated duration to determine whether the two are the same or within an acceptable discrepancy as described below and thus whether an article observed by the sensor unit is a valid article or not. That is, does the article pass the sensor unit at the expected travel duration or does it pass at some point sufficiently outside the expected duration for it not to be the article signalled by the preceding sensor unit.

Typically, the information about the expected travel duration is based on the time taken for an article to travel between the two sensor units and this is established during setting up of the system initially. Alternatively, the duration can be expressed as the distance between the two sensor units and this is measured, for example, by means of a shaft encoder operating on a drive shaft of the conveyor to generate pulsed signals corresponding to a unit distance travelled by the conveyor; or a combination of the two. Alternatively, the duration can be expressed as a time or distance interval between articles leaving the preceding sensor unit so that the subsequent sensor unit monitors the intervals between successive articles reaching it and rejects those which do not fall within the interval signalled from the preceding sensor unit.

The travel duration monitoring means can be selected from a wide range of means conventionally used in the electronics industry, for example a clock timer or a counter. It is also preferred that such means should be variable so that some discrepancy in the observed as opposed to the expected duration can be allowed for. Thus, articles which are snagged on an obstruction or which are otherwise displaced a minor amount on the conveyor are accepted and not treated as reject articles merely because their travel duration is not exactly the same as that expected. The optimum value for this discrepancy can be readily determined by simple trial and error.

The sensor unit also incorporates means for interpreting information concerning the identity and/or destination of the article which is fed to it from the preceding sensor unit. Preferably, this information is held as a list of identities and/or destinations in a memory unit which is scanned to compare the incoming data with the list held, each sensor unit in thr system having a numerical or other machine handleable code to identify the destination it serves in a distribution (sortation) system or the identity of the articles derived from the source that sensor unit serves in a collation system. Where the sensor unit merely passes on information and does not control a gate or divertor to change the path of the article, a single list of the identities and/or destinations downstream of the sensor unit will be held in the memory and a direct comparison with the incoming destination data can be carried out. However, where the sensor unit controls the operation of one or more gates or divertors at branches in the path or to feed articles into a storage bin or other destination, the destinations will be held in two or more lists corresponding to whether the gate/divertor is to be actuated or not. Thus, the incoming data will be compared to the lists to determine which list they fall in and thus whether the gate/actuator is to actuated or not.

It is preferred that the sensor unit incorporate a microprocessor and memory unit to enable it to carry out the functions required of it and these can be of any suitable form and method of operation. It is also preferred that the sensor unit should be capable of handling data relating to up to 100 or more articles in transit at any one time, although this number could be chosen at will depending on the parameters of the system and the capabilities of the hardware used. It is also preferred that the memory of the sensor unit should operate on an overflow, or first in first out, basis whereby information moves progressively through the memory as further information is fed into the memory until the oldest information is discarded once the memory is full. Additionally or alternatively, old information can be discarded after a predetermined time period has elapsed. Such types of memory for electronic data handling are readily available commercially in integrated circuit form. However, it is also possible to control the discarding of information from the memory by software control.

The information transmitted between sensor units is preferably transmitted in the form of electrical signals along wires connecting the sensor units in series. However, the information could be transmitted by other means, for example accoustically, optically either as a modulated light beam or along fibres, or by radio or other electromagnetic radiation. The transmitting means within or associated with each sensor unit can thus take a number of forms, but is preferably in the form of an output amplification device which transmits electrical signals to the next sensor unit in the series through interconnecting wires.

The above basic forms of the sensor unit may incorporate other features to enhance their operation. Thus, the first sensor unit in a system will incorporate means for entering the identity and/or destination information thereinto for onward transmission to the succeeding unit in the series. The information can be entered manually via a suitable keyboard, can be entered by providing indicia on the article, eg. bar codes or magnetic strips, which are scanned by the first sensor unit, or can be fed to the first sensor unit from a sensor unit on a collation system feeding articles to the system. The sensor units can incorporate means for giving a permanent record of the articles handled by that unit, for example a printer or the like. It is also preferred that the sensor units incorporate means whereby they can send information to the preceding sensor unit in the series during the setting up of the transport mechanism, as described below. This is conveniently achieved by suitable programming of the microprocessor within the sensor unit in known manner.

The components used to construct the sensor unit and the transport mechanism of the invention can be of conventional design and construction. However, the necessary operating instructions can be programmed into the microprocessor within the sensor unit to provide an intelligent unit programmed to operate the method of the invention.

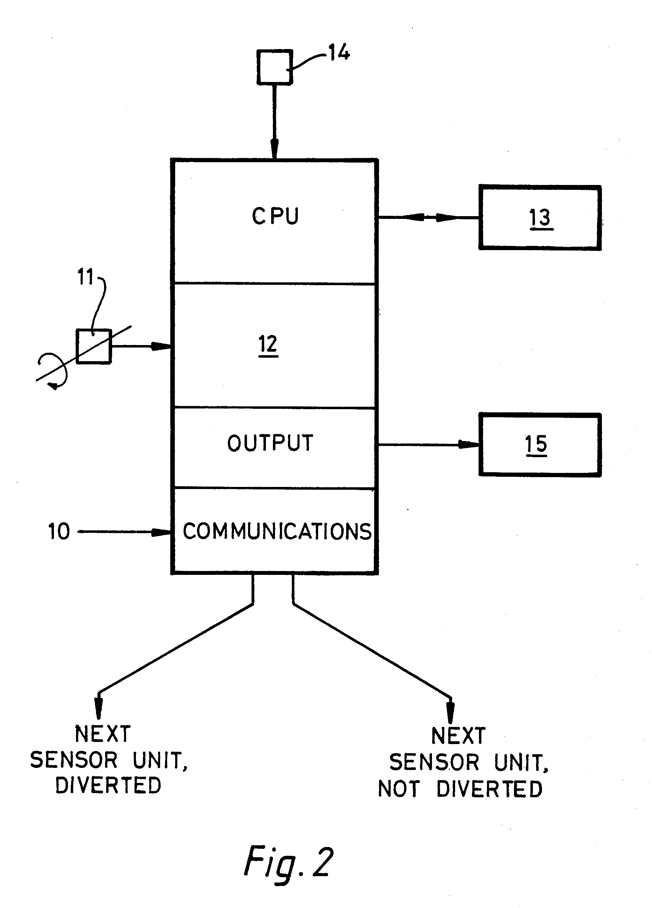

A specific example of a sensor unit suitable for use in the system of the invention is shown diagrammatically in Figure 2 and comprises a data input port 10, eg. of the RS 232 or 422 type, to receive a communications wire from a preceding unit. The port 10 is connected to a microprocessor 12, eg. of the Zilog 80 type, which controls the operation of the sensor unit. A shaft encoder 11 feeds signals into a timer/counter 12 integrated with the central processor unit (CPU) of microprocessor 12. The CPU is integrated or connected to a non volatile memory 13 adapted to hold information relating to the timer/count values, the identities and/or destinations of the articles passing the sensor unit, the list of the sensor units which the sensor addresses downstream of itself, the time delay for the actuation of the deflection means and other information. The CPU is also connected to a detection device 14, for example a photocell for detecting the presence of an article at the sensor unit, optionally via a suitable signal conditioning circuit; and to the operating means, eg a relay controlling a hydraulic gate, of a deflection means 15 via a suitable output stage. The memory 13 holds the list of the sensor units downstream of the particular unit. Where the unit controls a branch in the conveyor path, there will be two or more lists of downstream units according to which branch of the path they lie on. When the sensor unit is fed information relating to the destination of an article, it scans the lists to see which list the destination lies on. This will then tell the unit how the deflection means is to be operated, eg. gate open or closed.

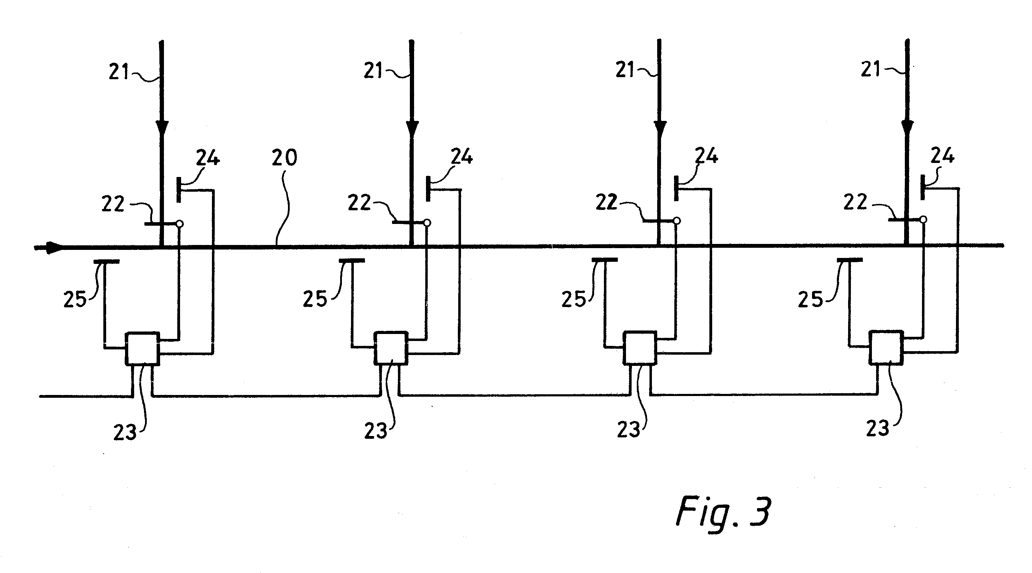

A collation system of the invention is shown diagrammatically in Figure 3 and comprises a main conveyor 20 which carries articles fed to it from side conveyors 21, for example different products from different production lines. The flow of articles from each side conveyor onto conveyor 20 is controlled by a gate 22 operated by a sensor unit 23. This sensor is located on the main conveyor upstream of the junction between the side and main conveyors. The sensor unit is essentially the same as that shown in Figure 2 and has an article detection means 24 monitoring the arrival of articles at gate 22 on the side conveyor and a second detection device 25 to monitor the arrival of articles at the sensor unit on the main conveyor. The sensor monitors the flow of articles along conveyor 20 and passes information to the succeeding sensor in the series along conveyor 20. The sensor unit also monitors the arrival of an article on side conveyor 21. When there is a suitable gap in the flow of articles along conveyor 20, sensor unit 23 actuates gate 22 to permit the article on conveyor 21 to move onto conveyor 20. The sensor unit 23 passes to the succeeding sensor unit the information of the identity of the article (which it recognises from the identity of the side conveyor) and includes this in the chain of information being passed along the series of sensor units.

In setting up the transport mechanism for operating the method of the invention, the sensor units 1 are located adjacent the conveyor system 2 they are to serve and are connected in series back to the first unit 1 at the entry point to the conveyor system 2. The sensor units 1 are then put into a reporting mode whereby each sensor unit reports upstream to its preceding unit and gives the identity of the destinations which are downstream of it. As indicated above, where a sensor unit operates a branch in the conveyor, it will receive information from each branch which it stores on separate sections, or lists, of its memory. However, it reports a single list of all destinations which are downstream of it to the preceding sensor unit. This process is repeated until the whole list of destinations is reported to and memorised by the first sensor unit.

The travel durations to be expected between sensor units, for example the count/timer values to be observed, between individual sensors can be determined by putting the system into a "teach" mode and running articles through it so that the system can measure and store the correct value. Alternatively, this value could be determined theoretically from the geometry of the system and entered into each sensor unit or it can be measured and adjusted by running a series of articles through the system and entering the values found in practice to be most suited to the system into each sensor unit. Similarly, the optimum 'window' for those values can also be determined by simple trial and error tests.

In carrying out the method of the invention, information concerning the destination and/or identity of an article passing the first sensor unit at the entry to the transport mechanism is fed to the sensor unit, for example by being manually keyed into the sensor unit or by the sensor unit scanning markings on the article optically or magnetically. This information is fed on to the next sensor unit along the path the article is to follow together with a signal indicating when the article departs from the previous sensor unit to initiate the count/timer in the succeeding sensor unit and information about the expected duration of travel between the sensor units, where this is not already held in the memory of that next sensor unit.

The next sensor unit detects when an article reaches it, verifies that the actual duration of travel from the preceding sensor unit complies with the expected duration of travel, thus verifying that the article is the one expected and that the identity and/or destination information relates to it. Where the next sensor unit serves the same length of conveyor or a conveyor which is moving at substantially the same speed as that served by its preceding sensor unit, the count/timer signal generation rate will be consistent with that of the sensor unit from which it derives its information. However, where the conveyors are moving at different speeds, as is often the case with secondary conveyors fed from a main conveyor, the signal generation rate will be different and may introduce sufficient errors to be unacceptable. In such a case it is desirable that the start of the count/timer signal generation be related to the actuation of the deflection means serving the second conveyor.

If the second sensor unit can not verify the travel duration of the article, for example where the article has been snagged on an obstruction or where the article has been placed on the conveyor between the sensor units, the second sensor unit will treat the article as a reject. It can then either cause the article to be ejected from the system immediately, or it can assign the article a destination coding corresponding to a reject destination. The article will then be treated as a valid article and information concerning it passed down the series of sensor units to ensure that it is directed into a reject destination.

It will be appreciated that the verification of a valid article described above can be carried out in response to a trigger signal from the article detection device when an article actuates it, in which case the sensor unit scans its memory and count/timer to establish whether the trigger signal corresponds to a valid signal. Alternatively, the sensor unit can remain quiescent until its count/timer shows that an article should be triggering the detection device and it then scans to see whether such a trigger signal occurs.

Where a valid trigger signal is detected by either of these methods of operation, the sensor unit establishes the identity and/or destination of the article from its memory and actuates the deflection means it controls in the appropriate manner. Typically, the sensor unit will send an electrical signal to actuate the deflection means. However, other means for actuating the deflection means can be used. The deflection means will usually take a finite time to operate, will be located some distance downstream of the sensor unit and a number of articles will be in transit between the sensor unit and the deflection means. It will usually therefore be necessary to incorporate a suitable time delay between the sensor establishing the validity of signal and actuating the deflection means so as to ensure that the deflection means acts upon the correct article. Alternatively, the deflection means may incorporate its own counter/timer circuit so that it delays acting upon a signal from the sensor unit for the requisite time.

The sensor unit also sends a signal to the next sensor unit identifying the intended destination of the article and intiating the count/timer of the next sensor unit. Thus, in the system of the invention, when an article enters the system, its destination is entered at the first sensor unit and from then on is handed on from one sensor to the next in company with the passage of that article along the conveyor path to its destination. The system does not require major computing power at the sensor units and can be readily extended or varied merely by adding or subtracting units where desired. Since each sensor unit contains sufficient intelligence to be set up and operated individually, no re-programming of a central computer is required and the sensor units are set up by passing articles through them rather than by adjustment of the program within them. Thus the system of the invention can be installed by persons not skilled in computer programming. Since the sensor units are not an integral part of the article transport mechanism they serve, the system of the invention can be applied to existing transportation mechanisms as well as being incorporated ab initio. Furthermore, since the sensor units create reject destinations for false or erroneous articles, these do not disrupt the synchrony of information relating to other articles and the system is self correcting. The ability to adjust independently the travel duration for each sensor and the discrepancy in the travel duration which it will accept, enables the systems of the invention to be manufactured in a standard form which is capable of use over a wide range of conditions.

## Claims

1. A method for controlling the travel of articles through an article transport mechanism 2 having a multiplicity of lines of travel for the articles to different destinations 3, which method comprises observing the passage of an article past one of a plurality of sensor units 1 mounted in series along the lines of travel and identifying the identity and/or the destination of that article from information passed to the said one sensor unit 1 from a preceding sensor unit 1, comparing the actual travel duration of the article from that preceding sensor unit 1 to the said one sensor unit with the expected duration of that travel to establish that the observed article is a valid article conforming to the identity and/or destination information provided from the preceding sensor unit 1, transmitting the information of the passage of the article and its identity and/or destination to a succeeding sensor unit 1 along the line of travel and, where required, actuating means 4 for diverting the article onto a different line of travel 2 or into its final destination 3 off the transport mechanism 2.

2. A sensor assembly 1 adapted to be operated in association with an article transport mechanism 2 in the method of claim 1 for causing an article to follow a selected one of a multiplicity of lines of travel through the article transport mechanism 2 whereby the article can be delivered to a predetermined destination 3, which sensor assembly 1 comprises a series of sensor units 1 adapted to be mounted in series with one another along the lines of travel, each sensor unit within but not terminal to the series comprising:

a. means 14 for detecting the passage of an article past the sensor unit,

b. means 12, 13 for receiving and storing information relating to the passage and destination of that article from an immediately preceding sensor unit 1 in the series,

c. means for relaying information relating to the passage of the article and its identity and/or destination to an immediately succeeding sensor unit 1 in the series in response to the passage of the article past the sensor unit 1,

d. means 13 for receiving and storing information relating to the expected duration of the travel of an article from the previous sensor unit 1 to the sensor unit 1 and means 11, 12, 13 for comparing the actual duration with the expected duration to establish the validity or otherwise of the article being detected by that sensor 1, and optionally

e. means 15 for actuating a means for varying the line of travel of the article in accordance with the information relating to the identity and/or destination for that article received from the preceding sensor unit 1 in the series.

3. A transport mechanism 2 provided with a sensor assembly 1 as claimed in claim 2 for controlling the travel of articles through the lines of travel of the mechanism 2.

4. A sensor unit 1 for use in the assembly of claim 2 comprising a microprocessor 12 programmed to react to the passage of an article past the sensor unit 1, to react to the identity and/or destination of the article from information supplied to the sensor unit 1, to determine the duration of travel of the article from a preceding sensor unit 1 and to compare this with the expected duration of travel and to transmit information relating to the passage of the articles, its identity and/or destination and expected duration of travel to a succeeding sensor unit 1 in series with the sensor unit 1.

5. A transport mechanism 2 as claimed in claim 3 wherein the transport mechanism 2 is a conveyor system 2 within a building and distributes articles from an input point to a plurality of destinations 3.

6. A transport mechanism 2 as claimed in claim 3 wherein each sensor unit 1 actuates a deflection means 4.

7. A conveyor system 2 for use in the method of claim 1 which comprises a series of conveyors 2 forming a branching network of paths along which articles travel to reach destinations 3 located along those paths, each branch in the path having a deflection means 4 operatively associated therewith and each destination 3 not located at the end of a path 2 having a deflection means 4 associated therewith, each deflection means 4 being controlled by a sensor unit 1 located upstream thereof, each sensor unit 1 being connected in series with the sensor unit 1 upstream thereof to form a branching string of the sensor units 1 extending from a single sensor unit at the entry point to the conveyor system 2, the sensor units being sensor units in an assembly as claimed in claim 2.

8. A method as claimed in claim 1 wherein the sensor unit 1 contains a memory unit 13 in which the destinations downstream of the sensor unit 1 are held in two lists according to whether the deflection means 3 immediately downstream of the sensor unit 1 is to be actuated or not.

9. A method as claimed in claim 1 wherein the travel duration observed is computed by the sensor unit 1 by means of a counter mechanism 11 actuated in response to pulses from a shaft encoder or a tachogenerator on a shaft driving a conveyor means 2 upon which the articles are carried.

10. A method as claimed in claim 1 wherein the expected travel duration accepted by the sensor unit 1 as indicating a valid article can be adjusted to provide a range over which the duration is deemed acceptable.

Fig.1

0255353

0255353

*Fig.2*

Fig. 3

0255353